# EUROPEAN PATENT SPECIFICATION

(11) **EP 1 637 206 B1**
(45) Date of publication and mention of the grant of the patent: **25.07.2007**
(21) Application number: 05077429.8
(22) Date of filing: 13.09.2002
(51) Int. Cl.: B01D 35/30

(54) **Separation module**
Trennmodul
Module de séparation

(30) Priority: 13.09.2001 US 332002 P
(43) Date of publication of application: 22.03.2006
(62) Divisional of application: 02759668.3
(73) Proprietor: ENTEGRIS, INC., Chaska, MN 55318 (US)
(72) Inventor: Niermeyer, Karl J., Tyngsboro, MA 01879 (US); Laverdiere, Marc, Wakefield, MA 01880 (US); Stankowski, Ralph J., Westford, MA 01886 (US); Smith, Joseph E., Andover, MA 01845 (US)
(74) Representative: Gambell, Derek

(56) References cited:
- EP-A- 0 269 054
- WO-A-01/64312

## Description

### BACKGROUND OF THE INVENTION

This invention relates to a separation module for purifying a fluid. Fluid separation devices having an easily replaceable and disposable fluid separation module have been used to control contamination in industrial processes for many years. Such devices are an integral part of the manufacture of many products including pharmaceuticals, food stuffs and beverages. However, nowhere is the need for effective contamination control greater than in the semiconductor fabrication industry. With circuit details in the submicron range and with further feature size reductions inevitable, the need for control of particulate, ionic, organic and other contaminants in the semiconductor process fluids is essential. Also, because semiconductor devices are fabricated in clean rooms, it is important to minimize the potential of contaminating the manufacturing environment. For this reason, disposable fluid separation devices are preferable in semiconductor fabrication processes in order to minimize contamination of the process lines as well as the clean room.

Examples of semiconductor process fluids which are processed at the point of use (POU) include those chemicals used in photolithographic processing (photochemicals). Photochemicals include materials such as primers, adhesion promoters, photoresists, edge bead removers, antireflective coatings, developers, dielectrics, and the like. Such chemicals are commonly dispensed onto the silicon wafer by a specialized pump and subsequently dispersed into a uniform thin film using a process called spin coating. The purity of these chemicals at the POU is essential to producing acceptable product yields.

Fluid separation devices are in general of two types. In the first type, the separation element such as a filter is a replaceable component, while the pressure vessel which houses the element, i.e., the housing, is reusable. The housing also contains appropriate fluid connections to the rest of the fluid processing system. Replacing the fluid separation element requires opening the housing, removing the separation element, installing the replacement separation element into the housing and closing the housing. There are many disadvantages to this type of fluid separation device. First, the replacement operation is time consuming, especially if access to the housing is restricted. Secondly, because the housing contains a quantity of the fluid being processed and because the fluid separation element is usually saturated with the fluid, spillage of the fluid usually occurs. In the case of the hazardous fluids, spills can be a threat to the well-being of personnel in the area as well as potentially damaging to nearby equipment and facilities. Finally, the opening of the housing exposes the internal surfaces of the fluid processing system to unwanted contamination from the surrounding environment.

The second type of separation device is one in which the separation element is permanently attached to the housing, which also contains appropriate fluid connections to the rest of the fluid processing system, to form an integrated module. In this case, replacement involves disconnecting the entire separation module from the fluid processing system and reconnecting a replacement module to the system. In this manner, replacement is easier, exposure of the operator to hazardous chemicals is minimized and the reliability of the connection is significantly improved. The type of separation device is referred to as a disposable module, since the whole module is removed and disposed of whenever the separation element requires replacement regardless of what connector design is employed. Disposable modules usually require that multiple connections be made sequentially, a minimum of two connections, and more typically three or four. Threaded fasteners are cumbersome and sometimes difficult to engage; factors which involve the subsequent consumption of additional time and effort. Furthermore, the module has to be held in place while the connections are being made, which makes the connection event even more difficult since it requires performing two actions at the same time (i.e., holding the module in place and attaching each connector sequentially). Finally, in those applications in which the permanent connections to the fluid processing system are not rigid, as for example, when flexible tubing is used, liquid has a tendency to be discharged as the connections disengage. All of these problems exacerbate the time and effort required to replace a disposable module, in addition to still allowing for exposure of personnel to hazardous materials, and contamination of the manufacturing environment.

For these reasons, some disposable separation modules have been designed with features that allow them to be connected quickly and easily to the fluid processing system in a "quick-connect" fashion. These types of quick-connect modules provide for a set of connectors that sealingly engage with a single, simple stroke or action, to a mating set of connectors attached to a reusable substrate. Different types of mechanisms have been designed to accomplish quick-connect retention, all of which heretofore have required some form of relative motion between the male connector and its female counterpart, most commonly a twisting action.

It has also been proposed to provide a separation module in a system for dispensing a filtered fluid composition wherein the separation module is introduced into a housing having moving parts to effect a desired connection. This type of housing assembly is expensive and is subjected to breakage over time due to excessive use.

Accordingly, it would be desirable to provide a separation module which can be replaced in a fluid separation system without the need of a pivotable housing.

### SUMMARY OF THE INVENTION

Essential and optional features of the present invention are set out in the accompanying main- and sub-claims respectively.

The preferred separation module of this invention fits into a stationary receptor having a shelf which functions as a pivot line and a slot which receives and retains a latch of the separation module. The separation module includes a curved surface which fits onto the pivot line of the stationary receptor and a latch which cooperates with the slot of the stationary receptor to retain the separation module within the stationary receptor. The separation module includes a filter positioned within a housing of the separation module and fittings which connect a source of fluid to be purified to a point of use for the fluid being purified within the separation module. In one embodiment, the separation module is positioned in a portable manifold having fluid fittings which permit the use of the separation module in fluid transfer systems having a variety of functions.

### BRIEF DESCRIPTION OF THE DRAWINGS

Fig. 1 is a perspective view of a separation module of this invention.
Fig. 2 is a perspective view of a stationary receptor utilized in conjunction with the separation module of Fig. 1.
Fig. 3a, 3b, 3c and 3d are side view illustrating the use of a latch of the separation module of Fig. 1.
Fig. 4 is a side view of the separation module of Fig. 1 in the stationary receptor of Fig. 2.
Fig. 5 is a perspective view of the apparatus of Fig. 4 attached to a pump housing.
Fig. 6 illustrates an alternative separation module of this invention.
Fig. 7 illustrates an alternative separation module of this invention.
Fig. 8 is a perspective view of a portable stationary module and separation module of this invention.

### DESCRIPTION OF SPECIFIC EMBODIMENTS

The separation module of this invention is useful for purifying a fluid from a fluid dispensing system which includes a pump. The fluid dispensing system can include a single pump or a plurality of pumps such as a two pump system comprising a dispensing pump and a feed pump. Such a system, when dispensing a fluid, includes the separation module of this invention having a separation element which separates unwanted components of the fluid from the desired fluid composition.

The present invention will be particularly described herein with reference to a two pump fluid dispensing system including a feed pump, a dispensing pump and a separation module having a particular configuration of inlet means and outlet means. However, it is to be understood that the present invention can be utilized in a fluid dispensing system having a separation module regardless of the outer surface configuration of inlet means and outlet means on the surface of the separation module.

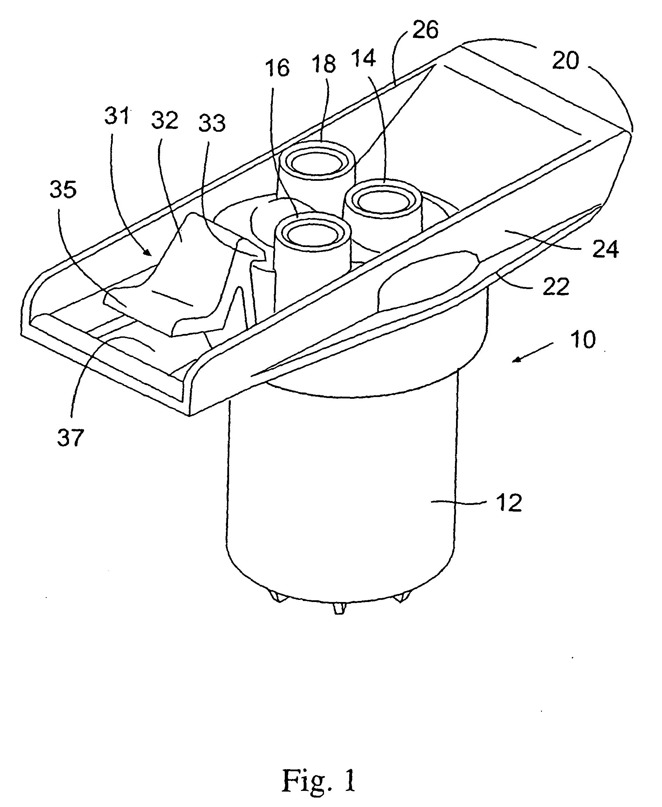

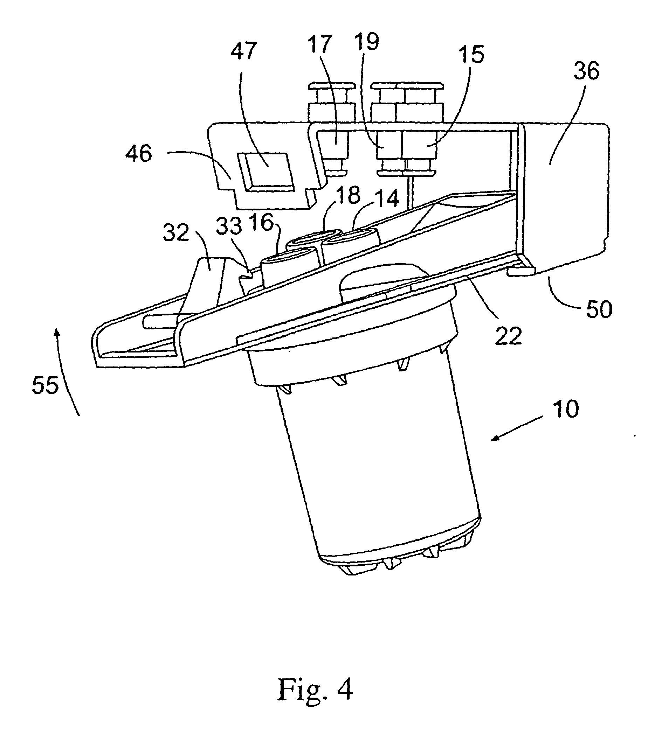

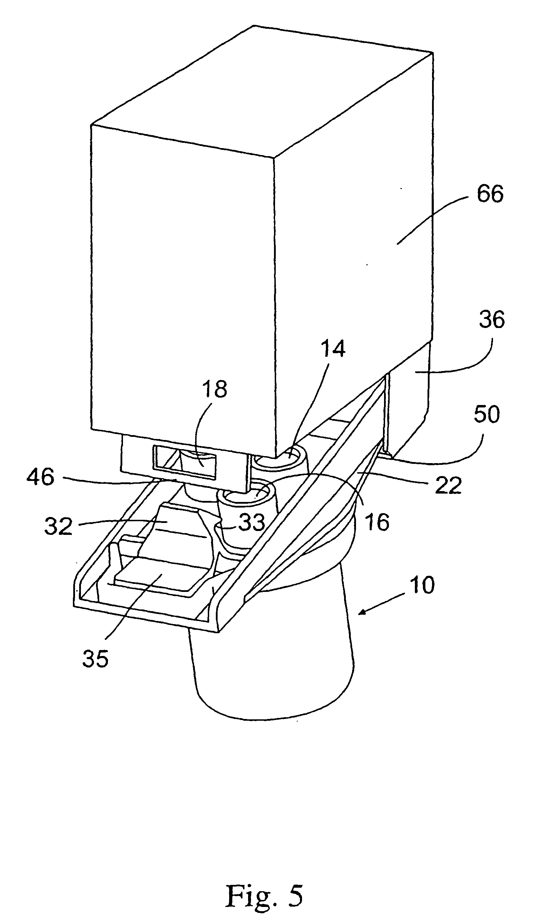

Referring to Fig. 1, the separation module 10 of this invention includes a housing 12 for a filter construction such as a pleated filter, a depth filter, hollow fibers or the like. Ports 14, 16 and 18 fit over mating fittings 15, 17 and 19 (Fig. 4). Housing 66 (Fig. 5) which contains a feed pump and a dispense pump such as that disclosed in U.S. Patent 5,263,069. Port 14 can be an inlet for fluid to be filtered. Port 16 can be an outlet for retentate. Port 18 can be an outlet for filtered fluid directed to a point of use. The separation module 10 includes a pivot surface 20 which extends substantially the complete width of the separation module 10 and two flanges 22 (one shown) which are positioned on opposing surfaces of the separation module 10 and which are attached to walls 24 and 26.

The separation module 10 is provided with a latch 31 having a vertical arm 32, a hook 33 and a lever 35. The latch 31 is secured to the separator module 10 by being molded such as with the walls of slot 37. The slot 37 permits movement of latch 31 when a force is applied to lever 35, such as manual force.

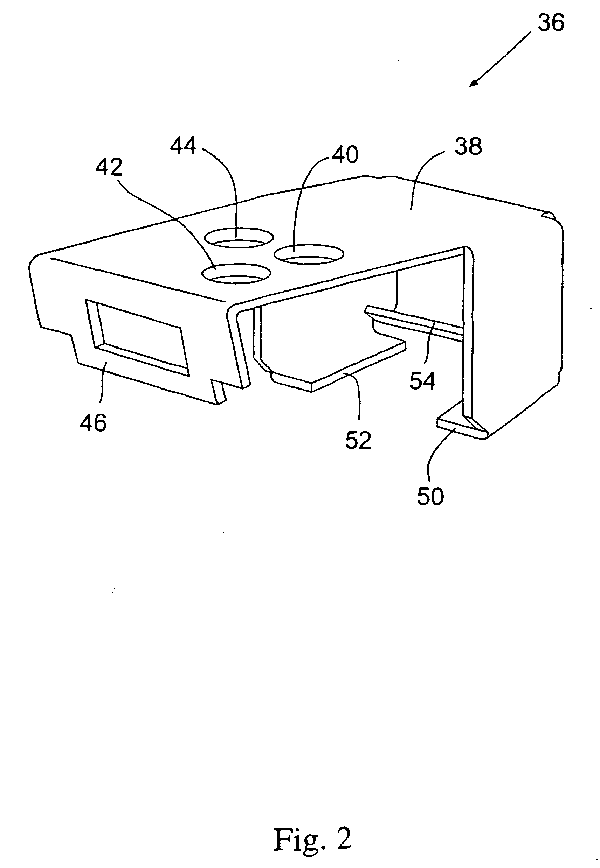

Referring to Fig. 2, the stationary receptor 36 includes a top surface 38 having holes 40, 42 and 44 through which fittings 15, 17 and 19 (Fig. 4) from a manifold extend. The stationary receptor 36 includes a flange 46 having an opening 47 which cooperates with vertical arm 32 and hook 33 of latch 31. The stationary receptor 36 also includes shelves 50 and 52 onto which flanges 22 of separation module 10 slide, as well as receptor pivot surface 54 onto which pivot surface 20 fits.

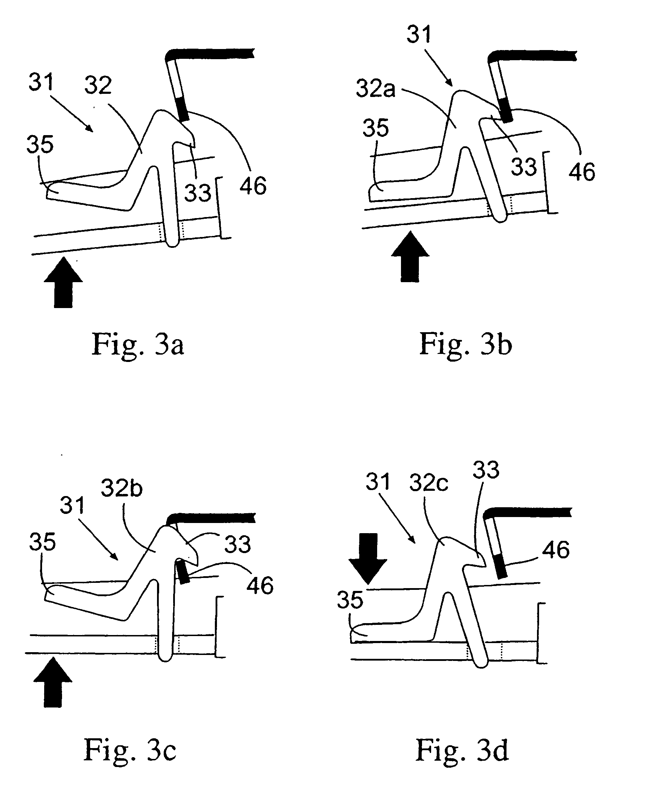

Referring to Figs. 3a, 3b, 3c and 3d, the latch 31 in its initial position is shown in Fig. 3a. As shown in Fig. 3b, a force in the direction of the arrow causes hook 33 to move away from flange 46. As shown in Fig. 3c, the latch 31 is moved upwardly by moving filtrate module 10 upwardly so that hook 33 fits onto flange 46. This latch position fixes the filtration module 10 to stationary module 36. As shown in Fig. 3d, the hook 33 is removed from flange 46 by applying a force to lever 35 as shown by the arrow. When latch 31 in the position shown in Fig. 3d, separation module 10 can be removed from stationary receptor 36.

As shown in Figs. 2 and 4, separation module 10 is slid into stationary receptor 36 onto slides 50 and 52 until pivot line 20 is positioned on pivot surface 54. When separation module 10 is so positioned, ports 14, 16 and 18 are positioned to fit over fittings 15, 17 and 19 when separation module 10 is rotated upwardly as indicated by arrow 55. By virtue of this upward movement, arm 32 is locked onto flange 46 and hook 33 extends through opening 47. This, in turn, locks separation module 10 into stationary receptor 36 so that leak-free fluid transfer can be affected between ports 14, 16 and 18 and fittings 15, 17 and 19.

As shown in Fig. 5, the stationary receptor 36 is attached to a pump housing 66 containing one or a plurality of pumps in a manner well known in the art. The fittings 14, 16 and 18 are sealed to mating fittings such as described above.

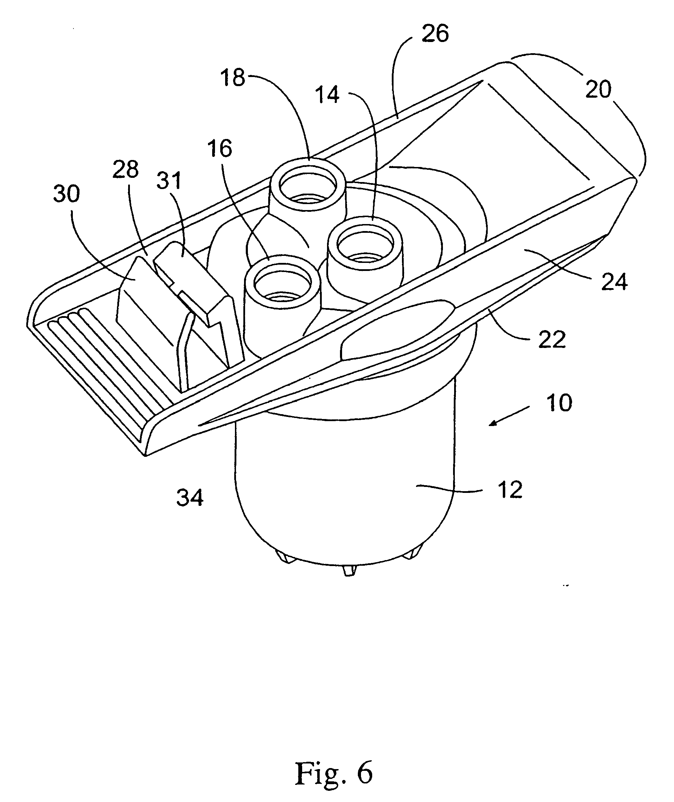

As shown in Fig. 6, the separation module 10 can be provided with a latch 28 comprising two arms 30 and 31. Arm 31 is provided with lip 34 which cooperates with the bracket of Fig. 2 as described below. The arms 30 and 31 are sufficiently flexible so that the arm 31 can be pushed by arm 30, which in turn, is pushed manually sequentially in order to engage or remove arm 31 from contact with flange 46 of bracket 36 and thereby to permit removal of separation module 10 from bracket 36.

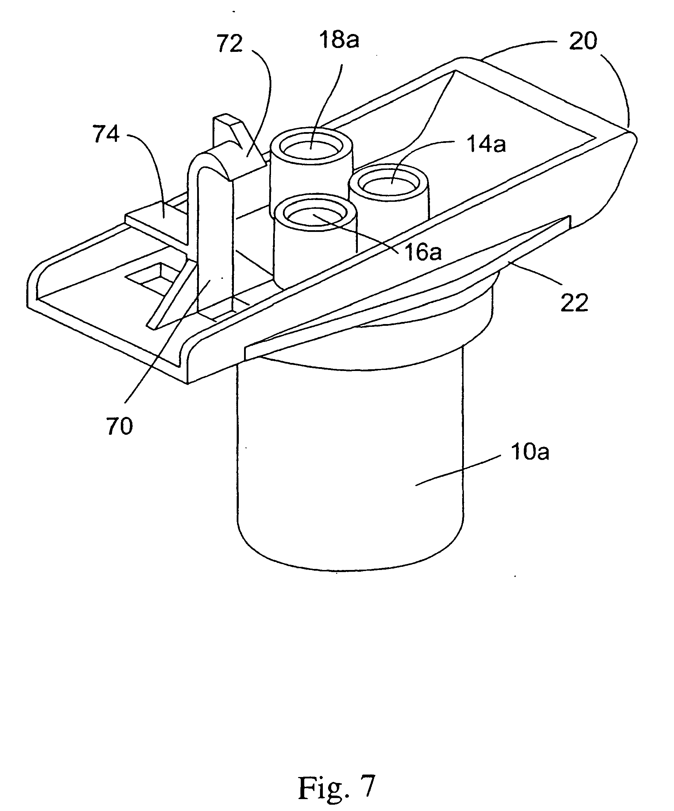

An alternative embodiment of a separation module of this invention is shown in Fig.7. The separation module 10a having ports 14a, 16a, and 18a also is provided with two shelves 22 and a pivot line 20 in the manner described above with reference to Fig. 1. The latch 70 includes a lip 72 and an arm 74. The lip 72 is configured to fit into a stationary receptor and the lever 74 permits application of manual force in order to remove lip 72 from the stationary receptor thereby to install and remove the separation module 10a from the stationary receptor in the manner described above with reference to Figs. 3a-3d.

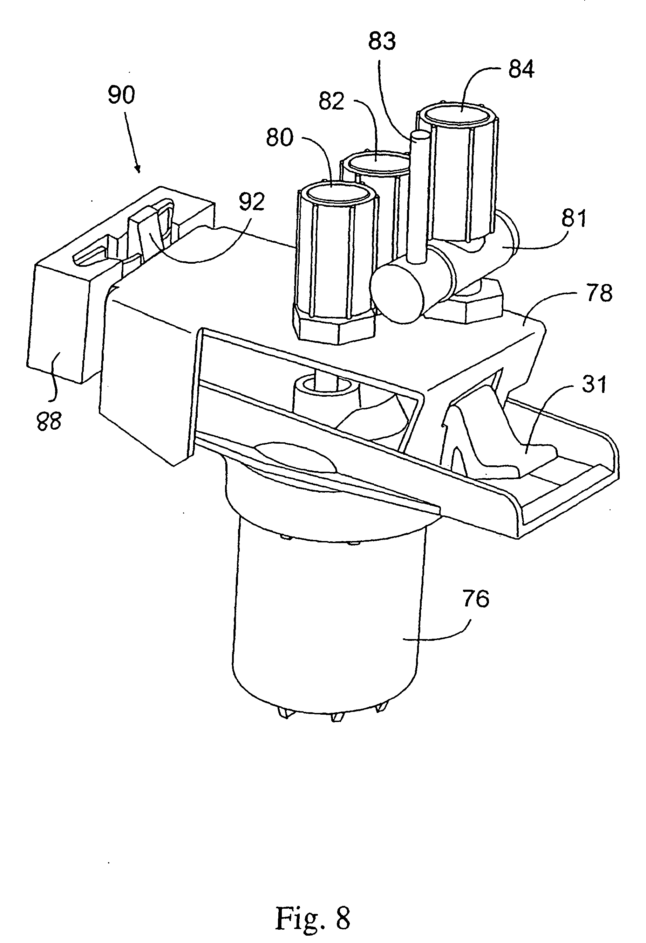

Referring to Fig. 8, an embodiment of this invention is illustrated which comprises a portable unit of a separation module 76 and the stationary receptor 78 that is portable. The separation module 76 and stationary receptor 78 are joined by latch 31 in the manner described above with reference to Figs. 3a-3d. The stationary receptor 78 is provided with fittings 80, 82 and 84 which can be mated with a pumping apparatus (not shown). The stationary receptor 78 is joined to a mounting 88 that can be mounted to a wall 90 by a latch 92. This embodiment facilitates installation of stationary receptor 78. The stationary receptor 78 can include a valve 81 having a manually activated apparatus lever 83 for opening or closing the valve 81 to permit or prevent fluid transfer through fittings.

## Claims

1. A molded separation module (10, 10a, 76) configured to be locked and unlocked from a stationary receptor (36, 78), the module comprising:
a housing (12)
a fluid inlet (14, 14a), and first and second fluid outlets (18, 18a; 16, 16a), parallel and exclusive of each other and located on one end of the housing;
a separation element within the housing in fluid communication with said inlet and said outlets; and
a curved pivot surface (20) configured to fit onto a shelf on said receptor;
**characterized in that** the module is capable of being locked and unlocked from the receptor by engagement and disengagement respectively of a latch (31, 70) of the module in an opening (47) on a flange (46) of the receptor, and
wherein said latch is a molded latch (31,70) fixed to said housing.

2. The module of claim 1 further comprising a lever (35, 74) to which force can be applied to open said latch.

3. The module of claim 1, positioned in a portable manifold.

## Patentansprüche

1. Trennmodul-Formkörper (10, 10a, 76) in einer Ausgestaltung zur Verriegelung mit und Entriegelung von einem stationären Aufnahmeteil (36, 78), wobei der Modul folgendes umfaßt: ein Gehäuse (12), einen Fluideinlaß (14, 14a) und einen ersten und zweiten Fluidauslaß (18, 18a; 16, 16a) parallel und in Alleinstellung zueinander und angeordnet an einem Ende des Gehäuses, ein Trennelement im Gehäuse in Fluidverbindung mit dem Einlaß und den Auslässen und eine gekrümmte Drehfläche (20) in einer Ausgestaltung zur Einpassung auf eine Auflage am Aufnahmeteil, **dadurch gekennzeichnet, daß** der Modul von dem Aufnahmeteil durch Eingriff bzw. Eingriffslösen einer Klinke (31, 70) des Moduls in einer Öffnung (47) an einem Flansch (46) des Aufnahmeteils mit dem Aufnahmeteil verriegelbar und von diesem entriegelbar ist, wobei die Klinke eine am Gehäuse festgelegte Formteilklinke (31, 70) ist.

2. Modul nach Anspruch 1, ferner mit einem Hebel (35, 74), auf den eine Kraft zum Öffnen der Klinke aufbringbar ist.

3. Modul nach Anspruch 1, angeordnet in einem tragbaren Verteiler.

## Revendications

1. Module de séparation moulé (10, 10a, 76) configuré pour être verrouillé et déverrouillé à partir d'un récepteur fixe (36, 78), le module comprenant:
■ un logement (12)
■ une entrée de fluide (14, 14a) et des première et deuxième sorties de fluide (18, 18a ; 16, 16a), parallèles et exclusives les unes par rapport aux autres et situées sur une extrémité du logement ;
■ un élément de séparation dans le logement en communication de fluide avec ladite entrée et lesdites sorties ; et
■ une surface pivot incurvée (20) configurée pour être adaptée sur une plaque sur ledit récepteur ;
**caractérisé en ce que** le module est capable d'être verrouillé et déverrouillé à partir du récepteur grâce à la mise en prise et au désengagement respectivement d'un verrou (31, 70) du module dans une ouverture (47) sur une aile (46) du récepteur, et
dans lequel ledit verrou est un verrou moulé (31, 70) fixé audit logement.

2. Module selon la revendication 1 comprenant en outre un levier (35, 74) auquel une force peut être appliquée pour ouvrir ledit verrou.

3. Module selon la revendication 1, positionné dans un collecteur portatif.
